# EUROPÄISCHE PATENTSCHRIFT

(11) **EP 1 784 297 B1**
(45) Veröffentlichungstag und Bekanntmachung des Hinweises auf die Patenterteilung: **11.02.2009**
(21) Anmeldenummer: 05782492.2
(22) Anmeldetag: 17.08.2005
(51) Int. Cl.: B29C 47/20, B29C 47/28

(54) **FOLIENBLASKOPF FÜR DIE HERSTELLUNG VON SCHLAUCHFOLIEN**
BLOW HEAD FOR PRODUCING BLOWN TUBULAR FILM
TETE DE SOUFFLAGE DE FILMS POUR LA PRODUCTION DE FILMS TUBULAIRES

(30) Priorität: 19.08.2004 DE 102004040151
(43) Veröffentlichungstag der Anmeldung: 16.05.2007
(73) Patentinhaber: HOSOKAWA ALPINE Aktiengesellschaft, 86199 Augsburg (DE)
(72) Erfinder: MAHLER, Franz, 86169 Augsburg (DE); BAIER, Christian, 86356 Neusäss (DE); HEINECKER, Michael, 86157 Augsburg (DE); LIBOWSKI, Joachim, 86356 Neusäss (DE)
(74) Vertreter: Rapp, Bertram
(86) Internationale Anmeldenummer: PCT/EP2005/008914
(87) Internationale Veröffentlichungsnummer: WO 2006/018293

(56) Entgegenhaltungen:
- EP-A- 1 211 047
- SU-A1- 1 502 383
- PATENT ABSTRACTS OF JAPAN Bd. 005, Nr. 131 (M-084), 21. August 1981 (1981-08-21) -& JP 56 067223 A (MITSUBISHI PLASTICS IND LTD), 6. Juni 1981 (1981-06-06)

## Beschreibung

Die Erfindung betrifft Folienblasköpfe, zur Herstellung von Ein- oder Mehrschichtschlauchfolien nach dem Oberbegriff des Anspruchs 1.

Gattungsgemäße Folienblasköpfe sind vorbekannt. Folienblasköpfe zur Herstellung von Einschichtschlauchfolien bestehen aus einem zentralen Dorn und einem diesen konzentrisch umgebenden Mantel. Zwischen Mantel und Dorn befindet sich ein Ringspalt durch den die Schmelze zur Ringspaltdüse transportiert wird. Der Dorn ist auf seiner äußeren Mantelfläche mit einer oder mehreren wendelförmigen Nuten versehen, dem Wendelverteiler. Die Tiefe der Nuten nimmt vom Anfang des Ringspaltes hin zur Ringspaltdüse ab. Die Kunststoffschmelze wird über eine oder mehrere Schmelzezuführvorrichtungen zu den Anfangsbereichen der Nuten des Wendelverteilers gefördert, so daß ein Teil der Schmelze in den Wendeln im Blaskopf in Richtung der Ringspaltdüse transportiert wird. Aufgrund der abnehmenden Nuttiefe wird immer mehr Schmelze über die die Nuten trennenden Stege in axiale Richtung gefördert. (vgl. DE 199 24 540 C1 oder DE 23 06 834).

Folienblasköpfe für Mehrschichtschlauchfolien unterscheiden sich von denen für Einschichtschlauchfolien dadurch, daß der zentrale Dorn von mehreren Ringelementen koaxial umschlossen ist. Die Einsätze weisen an ihrer äußeren Mantelflächen Wendelverteiler auf. Zwischen den einzelnen Einsätzen sind Ringspalte ausgebildet. Die verschiedenen Ringspalte werden vor der Ringspaltdüse zusammengeführt. Die Verteilerwendeln der einzelnen Ringelemente sind ebenfalls mit einer oder mehreren Schmelzezuführvorrichtungen verbunden, damit sie mit Schmelze versorgt werden (vgl. DE 23 20 687 oder DE 195 21 026).

Eine weitere Ausführungsform für einen Folienblaskopf für Mehrschichtschlauchfolien ist in der EP 1 055 504 B1 beschrieben. Bei dieser Variante sind die Einsatzteile konusförmig ausgebildet und werden aufeinander angeordnet. Wobei in die inneren oder äußeren Mäntel der konusförmigen Einsatzteile jeweils zwei gegenläufige spiralige Kanäle mit zur Mündung hin abnehmender Tiefe eingearbeitet sind.

Eine weitere Variante des Aufbaus eines Folienblaskopfes ist in der DE 20307412 U1 beschrieben. Hier sind die Wendelverteiler sowohl in die innenseitige Begrenzungswandung als auch in die außenseitige Begrenzungswandung des mindestens einen Schmelzekanals eingearbeitet. Hierdurch werden Folienverunreinigungen durch Stippen vorgebeugt. Die Wendeln der innenseitigen und der außenseitigen Begrenzungswandungen der Schmelzekanäle können dabei deckungsgleich oder versetzt zueinander angeordnet sein.

Eine weitere Variante ist in JP 56067223 beschreiben. Hier sind die Wendelverteilen an den inneren und aussenliegenden Begrenzungswänden angeordnet.

Der Wendelverteiler hat die Funktion, die Schmelze gleichmäßig im Ringspalt zu verteilen. Die Schmelze wird über Primärverteiler in mehrere Einzelströme aufgeteilt, welche in den Kanälen der Wendelverteiler münden. Der Schmelzestrom, der in den Wendeln fließt, wird fortlaufend aufgeteilt. In einen tangentialen Teil, der dem Verlauf der Wendel folgt und in einen axialen Teil, der über den zwischen zwei Wendeln bestehenden Steg in den Spalt zwischen zwei Ringelementen in Richtung Ringspaltdüse abströmt. Daher fließt an jeder Stelle auf dem Umfang des Austrittsringspaltes Schmelze, die aus einer Überlagerung der axialen und tangentialen Schmelzeströme aller Verteilerkanäle stammt. Diese beiden Geschwindigkeitskomponenten bewirken, daß sich die Schmelzen benachbarter Wendelkanäle nicht nur Stoß an Stoß berühren, sondern mit einer großen Kontaktfläche überlappen. Hierdurch kann, da bei diesem System keine Bindenähte auftreten, neben der gewünschten mechanischen auch eine hohe thermische Homogenität erreicht werden. Am Ende des Wendelverteilers ist aus der Radialströmung in den Kanälen ausschließlich eine Axialströmung in Richtung der Ringspaltdüse geworden.

Damit sich eine axiale Wendelströmung einstellt, muß ein Anfangsspalt auf Höhe des Anfangsbereichs des Wendelverteilers vorgegeben sein. Ein Teil der Schmelze strömt hier schlagartig aus dem Anfangsbereich des Wendelkanals in den Ringspalt. Dabei fließt der Kunststoff entlang der fertigungsbedingten Anfangskante und wird somit besonders orientiert und geschert. Dieser schnelle, axial fließende Schmelzestrom verdrängt Schmelzebereiche des oberhalb liegenden Kanals, wodurch ein scharfer Grenzbereich zwischen den Schmelzeströmen entsteht, sogenannte Wendelstreifen bzw. Portlines. Dies wirkt sich negativ auf die Qualität des Folienschlauches aus. Kunststoffe besitzen einen Memory-Effekt, deshalb ist eine Stelle mit besonderer Historie (in bezug auf Beanspruchung, Temperatur, etc.) auf der Folie als trüber Streifen oder welliger Bereich zu erkennen.

Aufgabe der Erfindung ist es. einen Folienblaskopf der eingangs genannten Art zu schaffen, der die Herstellung von Folienblasschläuchen ohne das Entstehen scharfer Grenzbereiche zwischen den axialen Schmelzeströmen, die auf der Folie als trübe Streifen oder wellige Bereiche zu erkennen sind, ermöglicht.

Die Aufgabe wird durch einen Folienblaskopf mit den Merkmalen des Anspruchs 1 gelöst. Zweckmäßige Ausgestaltungen und vorteilhafte Weiterbildungen der Erfindung sind in den Unteransprüchen angegeben.

Es konnte festgestellt werden, daß bei Blasköpfen für Mehrschichtfolien, deren Wendelverteiler auf dem Außenmantel von Dorn und Ringelementen angeordnet ist, das Auftreten der trüben Streifen (Portlines) oder welligen Bereiche nur auf der außenliegenden Schicht des Folienblasschlauches auftreten.

Beispielsweise werden bei einer 3-Schichtschlauchfolie die einzelnen Schichten nach der gleichen Vorgehensweise gebildet. Hierbei besitzt der Folienblaskopf drei konzentrisch angeordnete Ringspalte. Schmelze fließt vom Wendelverteiler, der an der inneren Begrenzungswand des jeweiligen Schmelzkanals liegt, in den Ringspalt. Danach werden die Schmelzen im Austrittsringkanal zusammengeführt. Alle geschädigten Schmelzebereiche der Innen- und Mittelschicht sind nach dem Zusammenfließen der drei Einzelschichten vollständig in der Schmelze eingebettet. In diesen Zustand finden diverse Ausgleichs- und Entspannungsvorgänge der Kunststoffmoleküle statt. Nur die geschädigte Schmelze der äußeren Folienschicht bleibt immer in Kontakt mit der Metalloberfläche des Blaskopfgehäuses. Dort kann keine Vergleichmäßigung erfolgen und die Fließgeschichte wird nach Düsenaustritt auf der Folie sichtbar.

Die kritische Kombination in einem Blaskopf ist demnach der Spalt zwischen dem Steg der äußeren Ringelements und der zylindrischen Gegenfläche des Gehäuses.

Um nun auch die Zonen der äußeren Wendelentladung in den Schmelzezusammenfluß einzulagern, wird dieser Wendelverteiler quasi gespiegelt. Die spiralförmigen Kanäle, der Wendelverteiler, werden nicht mehr in die äußere Mantelfläche des äußeren Ringelements, sondern in die innere Mantelfläche des Gehäuses eingearbeitet. Die Wendelentladung findet jetzt in Richtung der Innenseite statt, welche anschließend mit der Schmelze der anderen Schichten in Kontakt tritt. Dadurch wird erreicht, daß die geschädigten Schmelzebereiche sowohl der Innen-, der Mittel- und der Außenschicht nach dem Zusammenfließen der Einzelschichten vollständig in der Schmelze eingebettet sind. Somit ist die Extrusion einer Folie ohne trübe Streifen (Portlines) und wellige Bereiche möglich.

Eine Wendelentladung ohne die Kombination Spalt-Begrenzungswandung durchzuführen, indem man nur gegenüberliegende spiral- und halbkreisförmige Kanäle durch Abnahme der Kanaltiefe entlädt, führen zu keinem positiven Ziel.

Merkmale eines richtig ausgelegten Wendelverteilers, wie z.B. sehr gute Folientoleranzen, Selbstreinigung etc. gehen durch die erfindungsgemäße Gestaltung des Folienblaskopfes nicht verloren.

Weitere Besonderheiten und Vorzüge der Erfindung ergeben sich aus der folgenden Beschreibung eines Ausführungsbeispiels anhand der Zeichnung:

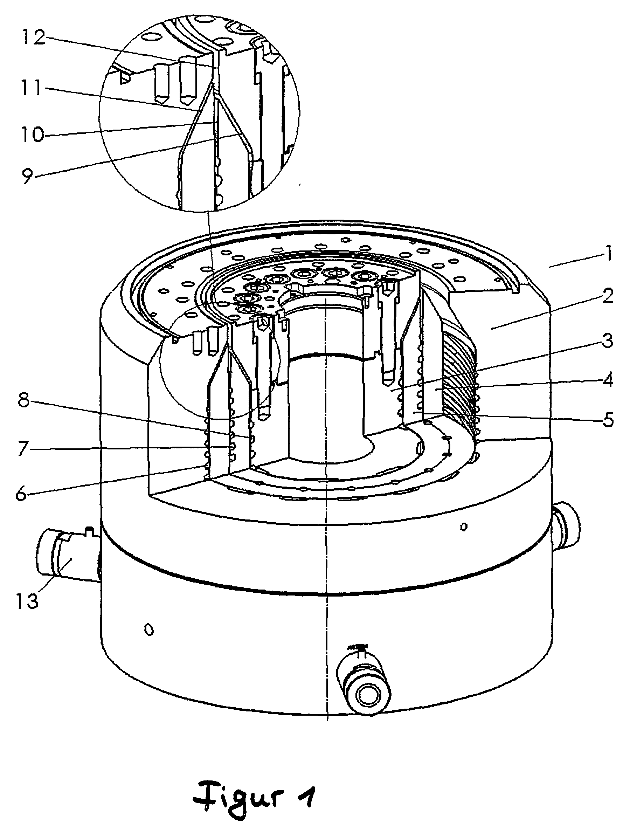

Figur 1: Folienblaskopf in einer Teilschnittansicht.

In der Figur 1 ist ein erfindungsgemäßer Folienblaskopf in einer bevorzugten Ausführungsform im Teilschnitt dargestellt. Es handelt sich um einen Blaskopf zur Herstellung einer Dreischichtschlauchfolie.

Der Folienblaskopf (1) umfaßt einen inneren zylindrischen Dorn (3), dieser ist konzentrisch umgeben von einem ersten Ringelement (5), welches wiederum von einem zweiten Ringelement (4) umgeben ist. Dieses zweite Ringelement (4) wird von einem dritten Ringelement, hier dem Gehäuse (2) konzentrisch umgeben. Zwischen Dorn (3) und innerem Ringelement (5), innerem Ringelement (5) und zweiten Ringelement (4) sowie zweiten Ringelement (4) und Gehäuse (2) ist jeweils ein Ringspalt (9, 10, 11), der Schmelzekanal, ausgebildet, welche zur Ringspaltdüse (12) hin immer breiter werden. Die Ringspalte (9, 10, 11) werden vor der Ringspaltdüse (12) zu einem Spalt zusammengefaßt.

Der Dorn (3) weist auf seiner äußeren Mantelfläche einen Wendelverteiler (8) auf. Die Tiefe der Wendeln nimmt in Richtung Ringspaltdüse (12) ab. Der Wendelverteiler besteht aus einer oder mehreren spiralförmig in das entsprechende Bauteil eingearbeiteten Nuten. Das innere Ringelement (5) weißt auf seiner äußeren Mantelfläche ebenfalls einen Wendelverteiler (7) auf. Das zweite Ringelement (4) weist keinen Wendelverteiler auf. In den Innenmantel des Gehäuses (2) ist ein weiterer Wendelverteiler (6) eingearbeitet.

Die Schmelze wird über die Schmelzezuführung (13) in den Folienblaskopf (1) transportiert, dort über verschiedene Verteiler, hier nicht dargestellt, zum Anfang der Wendelverteiler (6, 7, 8) gefördert. Vom Wendelanfang wird die Schmelze einmal in tangentialer Richtung in den Wendeln über den Umfang des Ringspaltes (9, 10, 11) verteilt, zum anderen in axialer Richtung im Ringspalt (9, 10, 11) zwischen Wendelverteiler und ebener zylindrischer Begrenzungswand des Nachbarringelements. Zum oberen Ende des Ringspaltes nimmt die tangentiale Komponente durch die abnehmende Tiefe der Nuten des Wendelverteilers und aufgrund des damit zur Ringspaltdüse breiter werdenden Ringspaltes ab sowie die axiale Komponente immer weiter zu. Vor der Ringspaltdüse werden die einzelnen Schmelzeströme zusammengeführt und als eine Folie aus dem Folienblaskopf geführt.

Da die Wendelentladung der außenliegenden Schichten des Folienschlauchs, d.h. innere und äußere Schicht, in Richtung Folienschlauchmitte stattfindet, welche anschließend mit der Schmelze der anderen Schichten in Kontakt treten, ist eine Herstellung einer Folie ohne Streifen und wellige Bereiche realisierbar.

Soll ein erfindungsgemäßer Folienblaskopf für Mehrschichtschlauchfolien von mehr als 3 Schichten vorgesehen sein, werden zwischen dem äußeren und inneren Ringelement entsprechend weitere Ringelemente angeordnet, wobei der Wendelverteiler des inneren Schmelzekanals in bezug auf die Mittelachse des Folienblaskopfes auf dessen innerer Begrenzungswandung angeordnet ist und der Wendelverteiler des äußersten Schmelzekanals in bezug auf die Mittelachse des Folienblaskopfes auf dessen äußerer Begrenzungswandung eingearbeitet ist. Soll hingegen der Folienblaskopf zur Herstellung von Einschichtschlauchfolien vorgesehen sein, besteht der Folienblaskopf aus Dorn mit Wendelverteiler auf dem Außenumfang, Ringelement ohne Wendelverteiler und Gehäuse mit Wendelverteiler auf dem Innenmantel.

Folienblasköpfe die zur Herstellung von Folienschläuchen vorgesehen sind, bei denen das Ausbilden von Wendelstreifen, trübe Streifen oder wellige Bereiche, vermieden werden sollen, sind so aufgebaut, daß die äußeren Wendelverteiler auf die innere und äußere Oberfläche des herzustellenden Folienschlauches gerichtet sind.

Die Erfindung ist nicht auf das vorstehend beschriebene und in der Zeichnung dargestellte Ausführungsbeispiel beschränkt. So kann der Folienblaskopf mit Dorn, einem Ringelement und Gehäuse ausgerüstet sein, aber auch mit mehreren Ringelementen, abhängig von der gewünschten Anzahl der Schichten des Folienschlauches. Die Wendelverteiler der mittleren Schmelzekanäle können wahlweise auf der inneren oder äußeren Begrenzungswandung des zugehörigen Schmelzekanals angeordnet sein.

### Bezugszeichenliste:

- 1: Folienblaskopf
- 2: Ringelement, hier Gehäuse
- 3: Dorn
- 4, 5: Ringelement
- 6, 7, 8: Wendelverteiler
- 9, 10, 11: Ringspalt, Schmelzekanal
- 12: Ringspaltdüse
- 13: Schmelzezuführvorrichtung

## Patentansprüche

1. Folienblaskopf (1) zur Herstellung von Ein- oder Mehrschichtschlauchfolien aus thermoplastischem Kunststoff umfassend
- eine Schmelzezuführeinrichtung (13),
- mehrere konzentrisch um die Mittelachse des Folienblaskopfes (1) angeordnete, ringspaltförmige Schmelzekanäle (9, 10, 11) mit an deren Begrenzungswandung angeordneten Wendelverteilern (6, 7, 8), wobei der Wendelverteiler (8) des inneren Schmelzekanals (9) auf der in Bezug auf die Mittelachse des Folienblaskopfes innenliegenden Begrenzungswandung angebracht ist und der Wendelverteiler (6) des äußeren Schmelzekanals (11) auf der in Bezug auf die Mittelachse des Folienblaskopfes außenliegenden Begrenzungswandung ungeordnet ist,
- mehrere Primärverteiler, welche die von der Schmelzezuführeinrichtung (13) kommende Schmelze in mehrere Einzelströme aufteilt, die dann in die Wendelverteiler (6, 7, 8) münden
- und eine einzige Ringspaltdüse (12), in die die Schmelzekanäle (9, 10, 11) münden.

2. Folienblaskopf (1) nach Anspruch 1 **dadurch gekennzeichnet, daß** die Schmelzkanäle (9, 10, 11) eine Begrenzungsfläche, mit Wendelverteiler (6, 7, 8) und eine ebene zylindrische Begrenzungsfläche aufweisen.

3. Folienblaskopf (1) nach Anspruch 1 und 2, **dadurch gekennzeichnet, daß** der Wendelverteiler (6, 7, 8) mindestens eine spiralförmige Nut aufweist.

4. Folienblaskopf (1) nach Anspruch 1 bis 3 **dadurch gekennzeichnet, daß** die Tiefe der Wendeln des Wendelverteilers (6, 7, 8) ausgehend von der Schmelzeeintrittsöffnung in Richtung Ringspaltdüse (12) abnimmt.

## Claims

1. Film die head (1) suitable for the production of single- or multi-layer tubular film made of thermoplastic polymer comprising
- a melt feed unit (13),
- several melt channels (9, 10, 11) in the form of annular slits arranged concentrically in relation to the centre axis of the film die head (1), with spiral distributors (6, 7, 8) located at the delimiting walls of the melt channels, whereby the spiral distributor (8) of the inside melt channel (9) is located in relation to the centre axis of the film die head on the inside delimiting wall and the spiral distributor (6) of the outside melt channel (11) is located in relation to the centre axis of the film die head on the outside delimiting wall,
- several primary distributors that divide the melt exiting the melt feed unit (13) into a number of separate melt streams which then merge in the spiral distributors (6, 7, 8),
- and one single ring-shaped die (12) into which the melt channels (9, 10, 11) merge.

2. Film die head (1) in accordance with Claim 1**, characterised in that** the melt channels (9, 10, 11) have a delimiting wall with spiral distributors (6, 7, 8) and a smooth cylindrical delimiting surface.

3. Film die head (1) in accordance with Claims 1 and 2, **characterised in that** the spiral distributors (6, 7, 8) have at least one spiral groove.

4. Film die head (1) in accordance with Claim 1 to 3, **characterised in that** the depth of the spirals of the spiral distributors (6, 7, 8) decreases from the melt inlet opening towards the ring-shaped die (12).

## Revendications

1. Tête de soufflage de films (1) pour la production de films tubulaires mono ou multicouches en matière thermoplastique comprenant
- un dispositif d'alimentation de masse fondue (13),
- plusieurs canaux de masse fondue (9, 10, 11) en forme de fente annulaire, disposés de manière concentrique autour de l'axe médian de la tête de soufflage de films (1) avec des distributeurs hélicoïdaux (6, 7, 8) disposés sur leur paroi de limitation, le distributeur hélicoïdal (8) du canal de masse fondue (9) intérieur étant monté sur la paroi de limitation intérieure par rapport à l'axe médian de la tête de soufflage de films et le distributeur hélicoïdal (6) du canal de masse fondue (11) extérieur étant disposé sur la paroi de limitation extérieure par rapport à l'axe médian de la tête de soufflage de films,
- plusieurs distributeurs primaires qui divisent la masse fondue arrivant du dispositif d'alimentation de masse fondue (13) en plusieurs flux individuels qui débouchent ensuite dans les distributeurs hélicoïdaux (6, 7, 8)
- et une seule buse à fente annulaire (12), dans laquelle débouche les canaux de masse fondue (9, 10, 11).

2. Tête de soufflage de films (1) selon la revendication 1, **caractérisée en ce que** les canaux de masse fondue (9, 10, 11) présentent une surface de limitation avec des distributeurs hélicoïdaux (6, 7, 8) et une surface de limitation cylindrique plane.

3. Tête de soufflage de films (1) selon les revendications 1 et 2, **caractérisée en ce que** le distributeur hélicoïdal (6, 7, 8) présente au moins une rainure en forme de spirale.

4. Tête de soufflage de films (1) selon les revendications 1 à 3, **caractérisée en ce que** la profondeur des hélices du distributeur hélicoïdal (6, 7, 8) diminue en partant de l'ouverture d'entrée de masse fondue en direction de la buse à fente annulaire (12).
